# EUROPEAN PATENT APPLICATION

(11) **EP 4 708 470 A2**
(43) Date of publication of application: **11.03.2026**
(21) Application number: 25200040.1
(22) Date of filing: 03.09.2025
(51) Int. Cl.: H01M 50/103, H01M 50/147, H01M 50/15, H01M 50/186

(54) **INJECTION HOLE COVER, AND BATTERY CELL AND BATTERY MODULE INCLUDING THE SAME**

(30) Priority: 04.09.2024 KR 20240119774; 30.12.2024 KR 20240200429
(71) Applicant: SK On Co., Ltd., Seoul 03161 (KR)
(72) Inventor: JU, Seung Hoon, 34124 Daejeon (KR); KWAK, Seung Ho, 34124 Daejeon (KR); PAK, Byeong Jun, 34124 Daejeon (KR); PARK, Seong Che, 34124 Daejeon (KR); LEE, Dong Hyee, 34124 Daejeon (KR); CHEONG, Hoemin, 34124 Daejeon (KR); CHOI, Yang Kyu, 34124 Daejeon (KR)
(74) Representative: Stolmár & Partner Patentanwälte PartG mbB

(57) **Abstract**

A battery cell includes a cell case including a case body and a cap plate, an electrode assembly, an electrode terminal, and an injection hole cover covering an injection hole formed in the cap plate. The cap plate includes a step portion recessed toward an inside of the cell case, and a recessed space formed on at least a portion of a periphery of the step portion and recessed toward an outside of the cell case, the injection hole cover includes a cover body installed on the step portion, and a convex portion extending from the cover body to be inserted into the injection hole, and the recessed space has a shape overlapping at least a portion of the cover body when the cover body is projected in a lateral direction of the cover body.

## Description

### TECHNICAL FIELD

The disclosure and implementations disclosed in this patent document generally relate to an injection hole cover, covering an injection hole of a battery cell (secondary battery) capable of being charged and discharged, and a battery cell and a battery module including the same.

### BACKGROUND

Secondary battery cells, unlike primary batteries, have the convenience of being able to be charged and discharged, and are thus receiving a large amount of attention as power sources for various mobile devices, electric vehicles, energy storage devices, and the like.

Secondary battery cells may be manufactured as pouch-type cells or can-type cells. Pouch-type cells have a structure in which the electrode assembly is accommodated inside a flexible cell case (pouch). Can-type cells have a structure in which the electrode assembly is accommodated inside a rigid cell case (can) and may be classified as cylindrical cells, prismatic cells, coin-type cells, and the like.

### SUMMARY

The disclosed technology can be implemented in some embodiments to provide an injection hole cover, and a battery cell and a battery module including the same.

The battery cell accommodates an electrolyte and an electrode assembly inside the cell case, and an injection hole for injecting the electrolyte may be formed in the cell case. After the electrolyte is injected into the cell case, the injection hole may be sealed by an injection hole cover.

In the related art, a method of inserting a press-fit ball into the injection hole to seal the injection hole or a method of welding a flat sealing cover to cover the injection hole is used. However, in the case of the related art, there is a problem that the limit internal pressure that the injection hole cover may withstand without being separated when the internal pressure of the battery cell increases is low.

Recently, as the battery capacity of products (for example, vehicles, energy storage systems, and the like) in which battery cells are installed increases, the size of the battery cell is also increasing. Accordingly, as the internal pressure of the battery cell increases, the injection hole cover may easily be separated from the injection hole or damaged.

In an aspect of the disclosed technology, an injection hole cover in which the limit internal pressure of the injection hole cover may be improved, and a battery cell and a battery module including the same may be provided.

In an aspect of the disclosed technology, an injection hole cover in which fracturing of an injection hole cover may be prevented and the stability of a battery cell may be improved, and a battery cell and a battery module including the same may be provided.

The injection hole cover of the disclosed technology, and the battery cell and the battery module including the same may be widely applied to devices within green technology fields such as electric vehicles, battery charging stations, and other solar power generation and wind power generation using batteries. In addition, the injection hole cover of the disclosed technology, and the battery cell and the battery module including the same may be used in eco-friendly electric vehicles, hybrid vehicles, and the like to prevent climate change by suppressing air pollution and greenhouse gas emissions.

In some embodiments of the disclosed technology, a battery cell includes a cell case having an accommodating space therein and including a case body and a cap plate covering an open end of the case body; an electrode assembly disposed in the accommodating space of the cell case; an electrode terminal disposed on the case body and electrically connected to the electrode assembly; and an injection hole cover covering an injection hole formed in the cap plate. The cap plate includes a step portion recessed toward an inside of the cell case from an outer side surface of the cap plate, and a recessed space formed on at least a portion of a periphery of the step portion and recessed toward an outside of the cell case from an inner side surface of the cap plate. The injection hole cover includes a cover body installed on the step portion and covering the injection hole, and a convex portion extending from the cover body to be inserted into the injection hole. The recessed space has a shape overlapping at least a portion of the cover body when the cover body is projected in a lateral direction of the cover body.

In a preferred embodiment, the cover body may include a wing portion protruding outwardly in the lateral direction rather than the convex portion, and the recessed space may overlap at least a portion of the wing portion in the lateral direction of the cover body.

In a preferred embodiment, the step portion may include a first portion in which the injection hole is formed and a second portion disposed on an outer side of the first portion, the second portion may include an inclined surface facing an outer side of the cell case from the first portion, and the recessed space may have a shape that widens toward the inside of the cell case at a portion opposite to the second portion.

In a preferred embodiment, the wing portion may include a first surface contacting the first portion and a second surface contacting the second portion, and the second surface may include an inclined surface, inclined with respect to the first surface.

In a preferred embodiment, a side surface of the convex portion and an inner side surface of the injection hole may be disposed to contact each other or may be disposed to be contactable each other when the cap plate is deformed.

In a preferred embodiment, a contact surface of the convex portion and the injection hole may be disposed closer to a center of the injection hole cover than a welding portion between the injection hole cover and the cap plate.

In a preferred embodiment, the cap plate may have a circular plate shape, and the injection hole may be formed in the center of the cap plate.

In a preferred embodiment, the cover body may include a wing portion protruding outwardly in the lateral direction rather than the convex portion and a concave portion recessed toward the convex portion on an opposite side of the convex portion.

In a preferred embodiment, a maximum thickness of a central area of the injection hole cover may have a value between 0.8 and 1.2 times a maximum thickness of the wing portion.

In a preferred embodiment, a maximum thickness of the wing portion may have a value greater than a maximum thickness of the convex portion.

In a preferred embodiment, the injection hole cover may include a vertical groove recessed in a thickness direction of the injection hole cover on at least one of two sides in the thickness direction of the injection hole cover.

In a preferred embodiment, a maximum thickness of a central area of the injection hole cover may have a value twice or more a thickness of the cap plate.

In a preferred embodiment, a thickness of the convex portion may have a value equal to one or more times a thickness of the cap plate.

In a preferred embodiment, the convex portion of the injection hole cover may include an insertion groove recessed in a lateral direction of the injection hole cover around a side surface of the convex portion, and an inner side surface of the injection hole may be inserted into the insertion groove.

In a preferred embodiment, the case body may include a side wall and an end plate, the side wall and the end plate may be formed integrally, and the electrode terminal may be riveted to the end plate.

In some embodiments of the disclosed technology, an injection hole cover covering an injection hole formed in a cap plate of a battery cell includes a cover body installed in a step portion recessed in the cap plate and covering the injection hole, and a convex portion extending from the cover body to be inserted into the injection hole. The cover body includes a wing portion protruding outwardly in a lateral direction rather than the convex portion, and a concave portion recessed toward the convex portion on an opposite surface of the convex portion.

In a preferred embodiment, a maximum thickness of a central area of the injection hole cover may have a value between 0.8 and 1.2 times a maximum thickness of the wing portion.

In a preferred embodiment, the wing portion may include a first surface having a step with respect to the convex portion, and a second surface extending from the first surface in a thickness direction of the cover body, and the second surface may include an inclined surface, inclined with respect to the first surface.

In a preferred embodiment, a maximum thickness of the wing portion may have a value greater than a maximum thickness of the convex portion.

In a preferred embodiment, the injection hole cover may include a vertical groove recessed in a thickness direction of the injection hole cover on at least one of two sides in the thickness direction of the injection hole cover.

In some embodiments of the disclosed technology, a battery module includes a plurality of battery cells; and a module housing accommodating the plurality of battery cells. At least one of the plurality of battery cells includes a cell case having an accommodating space therein and including a case body and a cap plate covering an open end of the case body; an electrode assembly disposed in the accommodating space of the cell case; an electrode terminal disposed on the case body and electrically connected to the electrode assembly; and an injection hole cover covering an injection hole formed in the cap plate. The cap plate includes a step portion recessed toward an inside of the cell case from an outer side surface of the cap plate, and a recessed space formed on at least a portion of a periphery of the step portion and recessed toward an outside of the cell case from an inner side surface of the cap plate. The injection hole cover includes a cover body installed on the step portion and covering the injection hole, and a convex portion extending from the cover body to be inserted into the injection hole. The recessed space has a shape overlapping at least a portion of the cover body when the cover body is projected in a lateral direction of the cover body.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell based on a preferred embodiment.
FIG. 2 is an exploded perspective view of the battery cell illustrated in FIG. 1.
FIG. 3 is a cross-sectional view taken along line I-I' of FIG. 1.
FIG. 4 is a perspective view illustrating the lower surface of the battery cell illustrated in FIG. 2, and illustrates a state in which the injection hole cover is separated.
FIG. 5 is a perspective view illustrating a state in which the injection hole cover in FIG. 4 is coupled.
FIG. 6 is a cross-sectional view taken along line II-II' of FIG. 4.
FIG. 7 is a cross-sectional view taken along line III-III' of FIG. 5.
FIG. 8 is a cross-sectional view illustrating a state in which the injection hole cover in FIG. 7 is welded.
FIG. 9 and FIG. 10 are cross-sectional views illustrating forces acting on a cap plate and an injection hole cover, where FIG. 9 shows a state before the cap plate is deformed, and FIG. 10 shows a state in which the cap plate is deformed.
FIG. 11 is a schematic diagram illustrating the force acting on the arched structure.
FIG. 12 is a cross-sectional view illustrating another embodiment of the configuration shown in FIG. 8.
FIG. 13 is a cross-sectional view illustrating another embodiment of the configuration shown in FIG. 8.
FIG. 14 is a cross-sectional view illustrating a state in which the cap plate is deformed in FIG. 13.
FIG. 15 is a perspective view of a battery module based on a preferred embodiment.

### DETAILED DESCRIPTION

Features of the disclosed technology disclosed in this patent document are described by example embodiments with reference to the accompanying drawings.

Hereinafter, the disclosed technology will be described in detail with reference to the attached drawings. However, this is only an example and the disclosed technology is not limited to the detailed embodiments described by way of example.

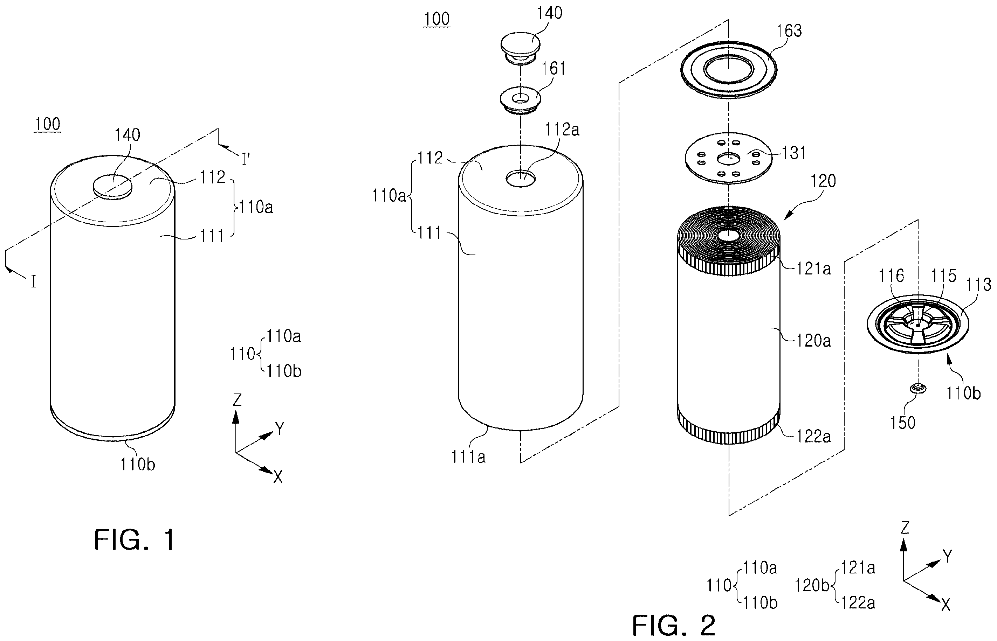

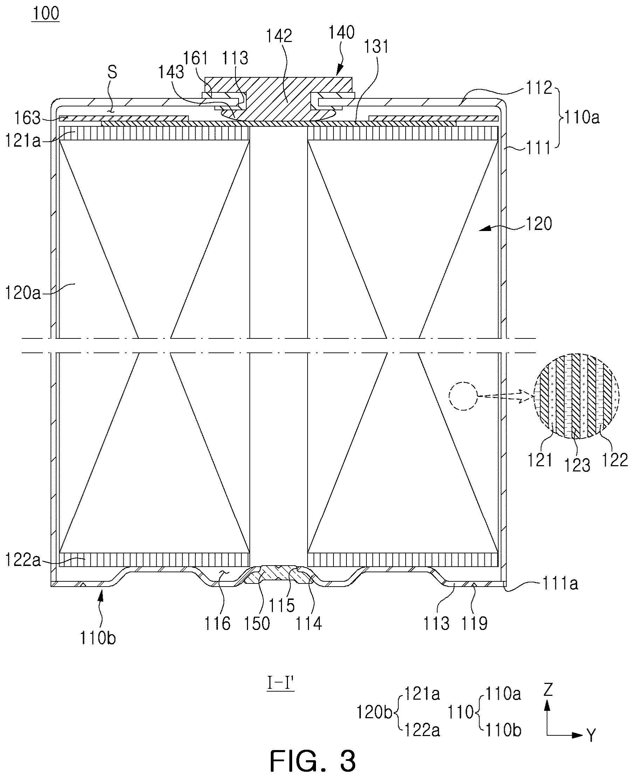

FIG. 1 is a perspective view of a battery cell 100 based on a preferred embodiment. FIG. 2 is an exploded perspective view of the battery cell 100 illustrated in FIG. 1. FIG. 3 is a cross-sectional view taken along line I-I' of FIG. 1.

Referring to FIGS. 1 to 3, a battery cell 100 based on a preferred embodiment may include a cell case 110 that forms an accommodating space (S) therein and includes a case body 110a and a cap plate 110b covering an open end of the case body 110a, an electrode assembly 120 disposed in the accommodating space (S) of the cell case 110, an electrode terminal 140 disposed on the case body 110a and electrically connected to the electrode assembly 120, and an injection hole cover 150 covering an injection hole 115 formed in the cap plate 110b.

The battery cell 100 based on a preferred embodiment may be configured as a cylindrical cell, but is not limited thereto. In the disclosed technology, a battery cell 100 based on a preferred embodiment will be described by illustrating a cylindrical cell as an example.

The cell case 110 may form an accommodating space (S) therein. The cell case 110 may include a case body 110a and a cap plate 110b covering an open end 111a of the case body 110a. The case body 110a may include a side wall 111 and an end plate 112. The cap plate 110b covering the open end of the case body 110a. The accommodating space (S) may be defined as an internal space surrounded by the case body 110a and the cap plate 110b. An electrode assembly 120 and an electrolyte may be accommodated in the accommodating space (S) of the cell case 110.

The case body 110a may include a side wall 111 forming an accommodating space (S) inside, and an end plate 112 having a through-hole 112a formed therein. The accommodating space (S) may be formed by the side wall 111 and the end plate 112 of the case body 110a.

In a preferred embodiment, the battery cell 100 may be provided as a cylindrical cell. In this case, the case body 110a may have a cylindrical shape with one end 111a open. The case body 110a may have a hollow cylindrical shape including a circular cross-section. However, the disclosed technology is not limited to cylindrical cells, and may also be applied to prismatic cells.

The side wall 111 has a tube shape, and the end plate 112 may have a plate shape covering one end (for example, the top side) of the accommodating space (S).

The side wall 111 may have a circular tube shape. The end plate 112 may have a plate shape in which at least a portion is flat. The thicknesses of the end plate 112 and the side wall 111 in the case body 110a may be variously changed. For example, the end plate 112 and the side wall 111 may have the same thickness, and the thickness of the end plate 112 may have a value greater than that of the thickness of the side wall 111. The case body 110a may include a metal material such as aluminum or an aluminum alloy, but the material of the case body 110a may be variously changed.

As illustrated in FIGS. 1 to 3, the side wall 111 and the end plate 112 of the case body 110a may be formed integrally. For example, the case body 110a may be manufactured in a shape in which the side wall 111 and the end plate 112 are formed integrally by deep drawing a metal sheet. When the case body 110a is formed integrally, a process of joining the side wall 111 and the end plate 112 is not required, so that the manufacturing of the case body 110a and/or the battery cell 100 may be facilitated and workability may be improved.

However, the case body 110a of the disclosed technology is not limited to a configuration in which the side wall 111 and the end plate 112 are formed integrally, and the side wall 111 and the end plate 112 may be manufactured separately and then joined or bonded to each other by welding, crimping, or the like.

A through-hole 112a may be formed in the end plate 112 of the case body 110a. The through-hole 112a may be provided for coupling an electrode terminal 140. The case body 110a has a circular cross-section, and the through-hole 112a may be formed in the center of the end plate 112. In this case, the electrode terminal 140 coupled to the through-hole 112a may be disposed in the center of the end plate 112.

The cap plate 110b may cover the open end 111a of the case body 110a. The cap plate 110b may be coupled to the case body 110a. For example, the cap plate 110b may be welded or crimped to the end 111a of the case body 110a.

The cap plate 110b may cover the accommodating space (S) on the opposite side of the end plate 112.

An injection hole 115 may be formed in the cap plate 110b, for injecting an electrolyte into the interior of the case body 110a. The injection hole 115 may be formed in the center of the plate body 113 of the cap plate 110b, but the position and size thereof may be variously changed. The injection hole 115 may be sealed with an injection hole cover 150 after the electrolyte is injected.

The cap plate 110b may include a step portion 114 that is sunken toward the inside of the cell case 110 from the outer side surface of the cap plate 110b, and a recessed space 116 that is formed on at least a portion of the periphery of the step portion 114 and is sunken toward the outside of the cell case 110 from the inner side surface of the cap plate 110b.

The electrode assembly 120 may be disposed in the accommodating space (S) of the cell case 110. The electrode assembly 120 may include a cathode, an anode, and a separator 123. The cathode and the anode may each include a current collecting foil (or metal foil) and a mixture layer applied to at least one surface of the current collecting foil. The mixture layer may include an active material. The separator 123 may be interposed between the cathode and the anode to electrically insulate the cathode and the anode. The cathode, the anode, and the separator 123 may be repeatedly disposed to form an electrode assembly 120. As an example, the electrode assembly 120 may have a winding shape in which the cathode, the separator 123, and the anode are stacked and wound. However, the electrode assembly 120 is not limited to the winding structure. For example, the electrode assembly 120 may also have a stacking shape, a zigzag-folding shape, and a stack-folding shape.

The electrode assembly 120 may include a first electrode 121 and a second electrode 122 with different polarities. As an example, the first electrode 121 may be provided as a cathode and the second electrode 122 may be provided as an anode, or vice versa.

The electrode assembly 120 may include a body 120a in which a first electrode 121 and a second electrode 122 are arranged with a separator 123 therebetween, and an electrode tab 120b extended from the first electrode 121 or the second electrode 122. The body 120a may include a coated portion on which an active material is applied, and the electrode tab 120b may include an uncoated portion (non-coating portion) on which an active material is not applied. The electrode tab 120b may have a shape that is overlapped or bent in a certain shape.

The electrode tab 120b may include a first electrode tab 121a extended from the first electrode 121 and a second electrode tab 122a extended from the second electrode 122. The first electrode tab 121a may include an uncoated portion of the first electrode 121, and the second electrode tab 122a may include an uncoated portion of the second electrode 122.

The electrode assembly 120 is connected to a current collector 131, and the current collector 131 may be electrically connected to an electrode terminal 140 of a battery cell 100 by welding.

The first electrode tab 121a may be electrically connected to the electrode terminal 140 through the current collector 131. The first electrode tab 121a may be electrically connected to the current collector 131. As an example, the first electrode tab 121a and the current collector 131 may be electrically connected to each other by welding or the like. The current collector 131 may be electrically connected to the electrode terminal 140 by welding or the like.

The second electrode tab 122a may be electrically connected to at least one of the cap plate 110b or the side wall 111 of the case body 110a. In FIG. 3, the second electrode tab 122a is illustrated as being electrically connected directly to the cap plate 110b, but it is also possible for a current collector to be disposed separately between the second electrode tab 122a and the cap plate 110b.

The electrode terminal 140 may be disposed on the case body 110a and electrically connected to the electrode assembly 120. The electrode terminal 140 may be coupled to the through-hole 112a of the end plate 112. At least a portion of the electrode terminal 140 may be exposed to the outside of the case body 110a.

The electrode terminal 140 may be electrically connected to the electrode assembly 120. When the electrode terminal 140 is connected to the cathode of the electrode assembly 120, the electrode terminal 140 may correspond to the cathode terminal, and vice versa.

The electrode terminal 140 may be riveted to the through-hole 112a of the case body 110a. The electrode terminal 140 may be coupled to the end plate 112 by riveting while being inserted into the through-hole 112a of the end plate 112. The electrode terminal 140 may be riveted to the end plate 112 of the case body 110a. The electrode terminal 140 may have a rivet shape overall.

The electrode terminal 140 may include an outer portion 141 disposed on the outer side (upper side) of the end plate 112, an insertion portion 142 extending from the outer portion 141 toward the electrode assembly 120 and passing through a through-hole 112a, and an inner portion 143 extending from the insertion portion 142 and disposed on the inner side (lower side) of the end plate 112. The outer portion 141 may be disposed on the outer side of the case body 110a, and the inner portion 143 may be disposed in the accommodating space (S) of the case body 110a. The inner portion 143 may have a shape that is deformed by pressure and extends outwardly in the radial direction of the case body 110a. The end plate 112 may be disposed between the outer portion 141 and the inner portion 143. The outer diameter of the outer portion 141 and the outer diameter of the inner portion 143 may have values greater than the diameter of the through-hole 112a, and the outer diameter of the insertion portion 142 may have values smaller than the diameter of the through-hole 112a. The outer diameter of the outer portion 141 may have values smaller than the outer diameter of the case body 110a. The outer diameter of the outer portion 141 may be set in consideration of the welding space with the bus bar connected to the outer portion 141.

For insulation between the electrode terminal 140 and the end plate 112, a gasket 161 may be disposed between the electrode terminal 140 and the end plate 112. The gasket 161 may be disposed between the electrode terminal 140 and the through-hole 112a. The gasket 161 may include an electrically insulating material. The gasket 161 may serve as a sealing member sealing between the electrode terminal 140 and the end plate 112.

When the gasket 161 is disposed on the outside of the electrode terminal 140 and rivet processing is performed on the electrode terminal 140, the gasket 161 may be disposed between the electrode terminal 140 and the end plate 112. The gasket 161 may seal and/or insulate between the electrode terminal 140 and the end plate 112.

For electrical insulation between the current collector 131 and the cell case 110, an electrically-insulating insulating member 163 may be disposed between the current collector 131 and the cell case 110. As an example, the insulating member 163 may be disposed between the current collector 131 and the end plate 112. The shape or dispositional position of the insulating member 163 may be changed in various ways.

The injection hole cover 150 may cover the injection hole 115 formed in the cap plate 110b. The injection hole cover 150 may seal the injection hole 115 after the electrolyte is injected into the case body 110a through the injection hole 115. The injection hole cover 150 may be coupled to the cap plate 110b while covering the injection hole 115. As an example, the injection hole cover 150 may be welded to the cap plate 110b. The injection hole 115 may have a circular shape, and correspondingly, the injection hole cover 150 may also have a circular cross-section.

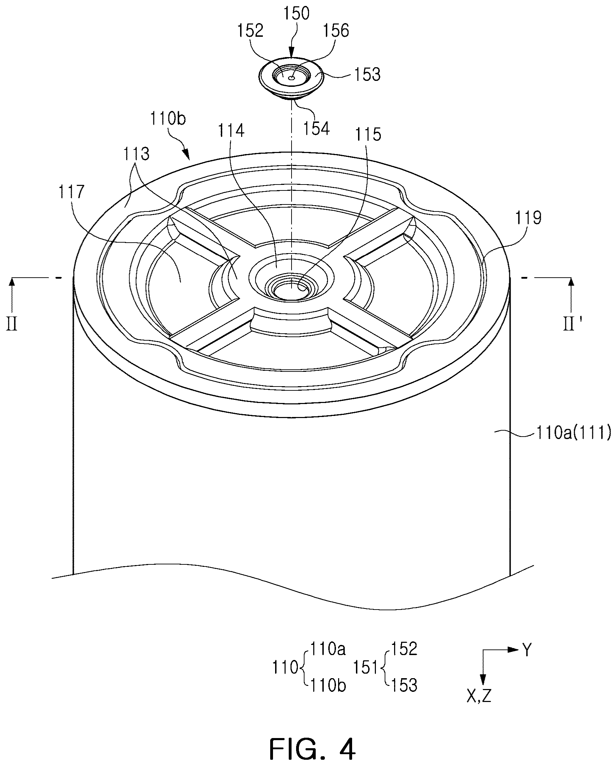

Hereinafter, with reference to FIGS. 4 to 14, the injection hole cover 150 and the cap plate 110b to which the injection hole cover 150 is coupled will be described.

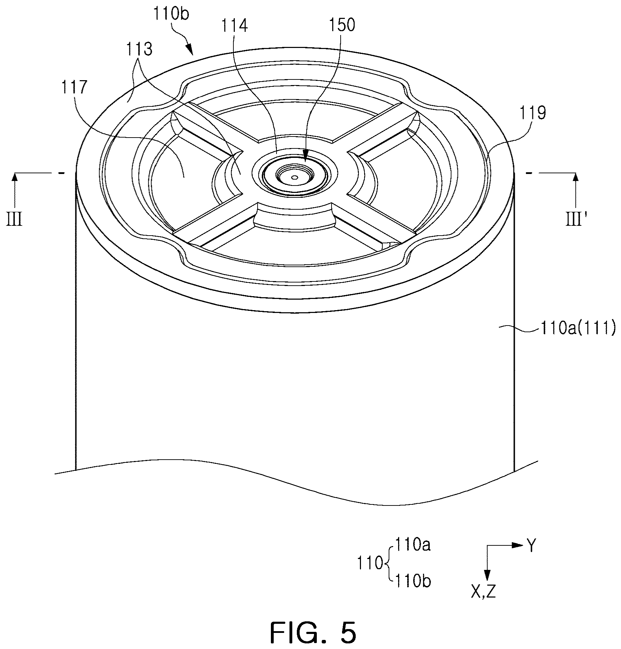

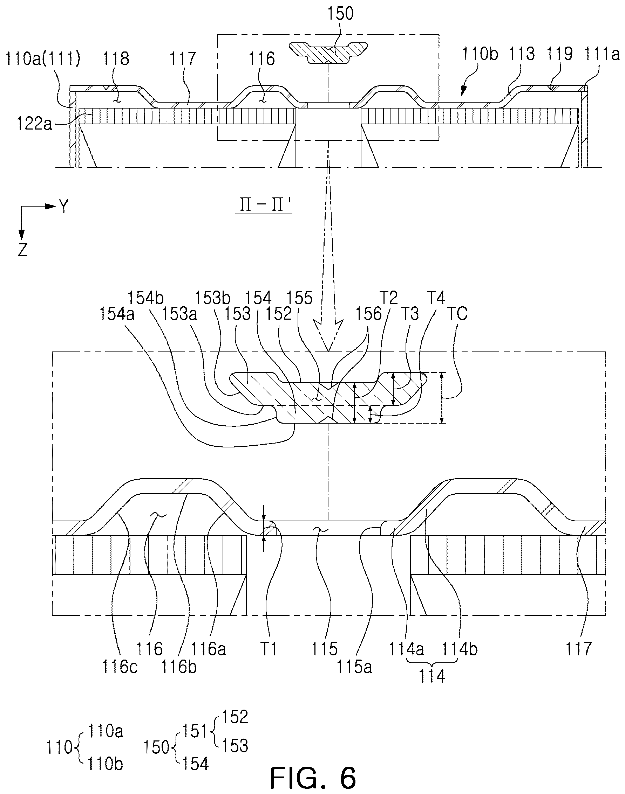

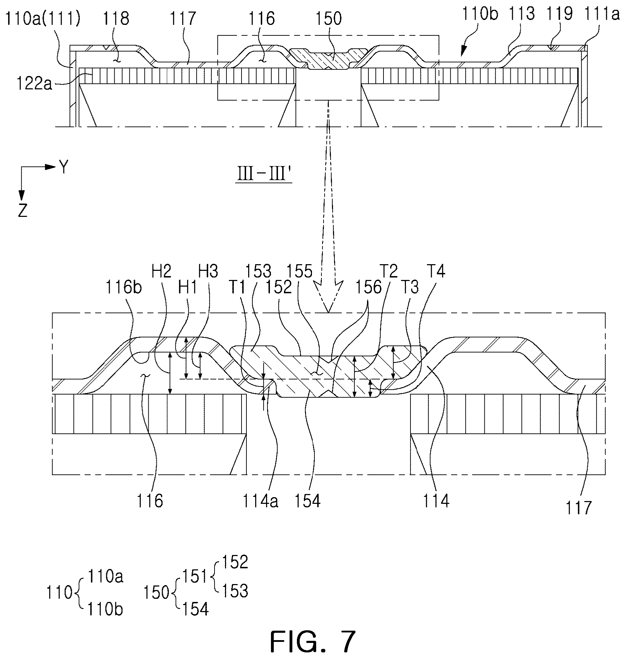

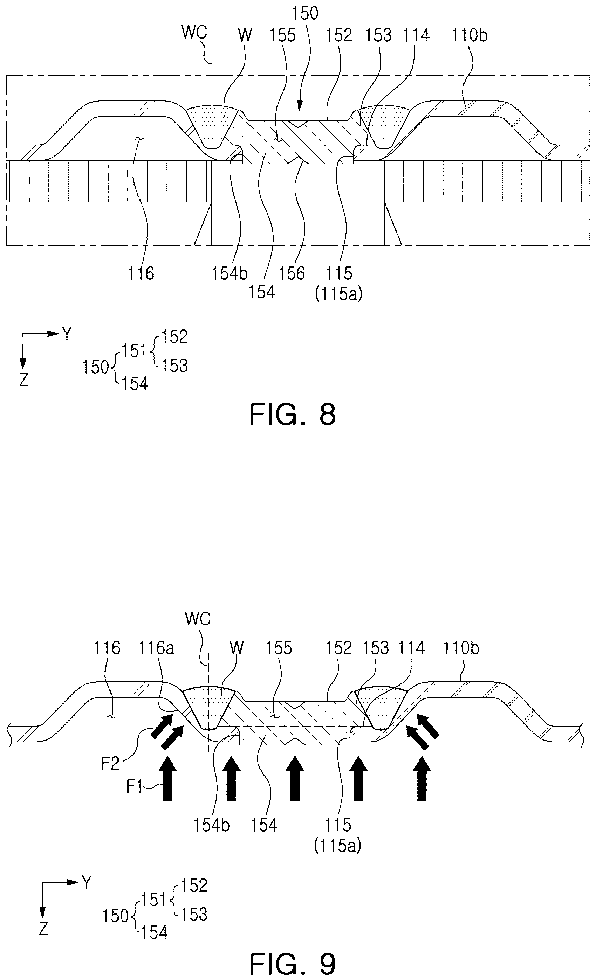

FIG. 4 is a perspective view illustrating the lower surface of the battery cell 100 illustrated in FIG. 2, and illustrates a state in which the injection hole cover 150 is separated. FIG. 5 is a perspective view illustrating a state in which the injection hole cover 150 in FIG. 4 is coupled. FIG. 6 is a cross-sectional view taken along line II-II' of FIG. 4. FIG. 7 is a cross-sectional view taken along line III-III' of FIG. 5. FIG. 8 is a cross-sectional view illustrating a state in which the injection hole cover 150 in FIG. 7 is welded. FIGS. 4 and 5 are perspective views illustrating FIG. 2 flipped upside down, and FIGS. 6 to 8 are cross-sectional views illustrating FIG. 3 flipped upside down.

Referring to FIGS. 4 to 8 together, the cap plate 110b may include a step portion 114 recessed toward the inside of the cell case 110 from the outer side surface of the cap plate 110b, and a recessed space 116 that is formed on at least a portion of the periphery of the step portion 114 and recessed toward the outside of the cell case 110 from the inner side surface of the cap plate 110b. The cap plate 110b may have a shape in which the step portion 114 and the recessed space 116 are formed in the plate body 113.

The step portion 114 may be located at the center of the cap plate 110b, and the recessed space 116 may be located radially outside relative to the step portion 114 in the cap plate 110b. An injection hole 115 is disposed in the center of the cap plate 110b, and the injection hole 115 may be disposed in the step portion 114.

The cap plate 110b may include a plate body 113. When viewed from the outside of the cap plate 110b, the plate body 113 has a recessed space formed by the step portion 114 in which the injection hole cover 150 may be disposed, and when viewed from the inside of the cap plate 110b, a recessed space 116 may be formed by the step portion 114.

The step portion 114 may include a first portion 114a in which the injection hole 115 is formed, and a second portion 114b disposed on the outside of the first portion 114a. The second portion 114b may include an inclined surface facing the outside of the cell case 110 from the first portion 114a. The step portion 114 may have a shape that widens toward the outside of the cell case 110. The injection hole 115 may have a shape penetrating the first portion 114a of the step portion 114. The injection hole 115 may be formed in the center of the cap plate 110b.

The recessed space 116 may be formed on the inner side surface of the cap plate 110b by forming the step portion 114 in the cap plate 110b. The recessed space 116 may have a shape that is sunken toward the outside of the case body 110a when viewed from the inside of the case body 110a. The recessed space 116 may have a ring shape to surround the injection hole 115.

The recessed space 116 may have a shape that widens toward the inside of the cell case 110 at a portion facing the second portion 114b.

The recessed space 116 may include a first inner surface 116a corresponding to the second portion 114b of the step portion 114 and a second inner surface 116b extending radially outward from the first inner surface 116a. The recessed space 116 may additionally include a third inner surface 116c extending toward the inside of the cell case 110 from the second inner surface 116b. The first inner surface 116a may be defined as the inner side surface of the first portion 114a of the step portion 114 in the cap plate 110b. The first inner surface 116a and the third inner surface 116c may have an incline, and the second inner surface 116b may be perpendicular to the axial direction of the cell case 110.

The injection hole cover 150 may cover the injection hole 115 formed in the cap plate 110b of the battery cell 100. The injection hole cover 150 may include a cover body 151 installed in the step portion 114 and covering the injection hole 115, and a convex portion 154 extending from the cover body 151 to be inserted into the injection hole 115. The cover body 151 may be defined as a portion disposed on the outside of the cap plate 110b. The convex portion 154 may have a shape extending from the cover body 151 in the inward direction of the cell case 110. The step portion 114 may have a first height H1 (see FIG. 7) so that the injection hole cover 150 does not protrude to the outside of the step portion 114.

The convex portion 154 may include a protruding surface 154a facing the accommodating space (S) of the cell case 110 and a side surface 154b facing the lateral direction.

Since the convex portion 154 has a state of being inserted into the injection hole 115, the convex portion 154 and the injection hole 115 may be in contact with each other. The side surface 154b of the convex portion 154 and the inner side surface 115a of the injection hole 115 may be disposed to be contactable with each other, or may be disposed to be in contact with each other when the cap plate 110b is deformed. For example, the diameters of the convex portion 154 and the injection hole 115 may have a size in which the side surface 154b of the convex portion 154 and the inner side surface 115a of the injection hole 115 are in contact with each other. In contrast, when the convex portion 154 is inserted into the injection hole 115, even if the side surface 154b of the convex portion 154 and the inner side surface 115a of the injection hole 115 do not come into contact with each other, it is also possible to configure the inner side surface 115a of the injection hole 115 to come into contact with the side surface 154b of the convex portion 154 when deformation of the cap plate 110b occurs.

When the side surface 154b of the convex portion 154 and the inner side surface 115a of the injection hole 115 are configured to come into contact, the step portion 114 of the cap plate 110b interferes with the side surface 154b of the convex portion 154, so that deformation of the cap plate 110b may be limited. For example, when internal pressure is applied toward the injection hole cover 150, the side surface 154b of the convex portion 154 and the inner side surface 115a of the injection hole 115 interfere with each other, so that deformation of the cap plate 110b may be limited. Accordingly, detachment of the injection hole cover 150 may be prevented.

The recessed space 116 of the cap plate 110b may have a shape that overlaps at least a portion of the cover body 151 when the cover body 151 is projected in a lateral direction of the cover body 151. The lateral direction may be defined as a radial direction (Y) of the cap plate 110b. The lateral direction may correspond to a direction perpendicular to a thickness direction (Z) of the cover body 151. For example, the recessed space 116 may have a shape that is sunken to a height corresponding to at least a portion of the side surface of the cover body 151. Referring to FIG. 7, the second height H2, which is a height of the recessed space 116, may be defined as the height from the inner side surface of the first portion 114a of the step portion 114 to the second inner surface 116b of the recessed space 116. When the cover body 151 is projected in the lateral direction of the cover body 151, the overlapping height of the recessed space 116 and the cover body 151 may correspond to the third height H3 illustrated in FIG. 7. In the case in which the height of the recessed space 116 is set so that the side surface of the cover body 151 and the recessed space 116 overlap, when the internal pressure of the cell case 110 increases, horizontal force (horizontal component force) may be applied to the cover body 151.

The cover body 151 includes a wing portion 153 protruding outwardly in the lateral direction further than the convex portion 154, and the recessed space 116 may overlap at least a portion of the wing portion 153 in the lateral direction of the cover body 151. For example, when the cover body 151 is projected in the lateral direction of the cover body 151, the recessed space 116 may have a shape that is sunken to a height corresponding to at least a portion of the side surface of the wing portion 153. When the wing portion 153 and the recessed space 116 are set to overlap in the height direction of the recessed space 116, horizontal force may be applied to the cover body 151 when the internal pressure of the cell case 110 increases. When horizontal force is applied to the cover body 151, the value of the limit internal pressure that the injection hole cover 150 may withstand against the internal pressure of the battery cell 100 may be increased. Accordingly, the injection hole cover 150 may be restricted from being separated from the injection hole 115.

At least a portion of the outer surface of the wing portion 153 may be in contact with the step portion 114. The step portion 114 may include a first portion 114a and a second portion 114b. The wing portion 153 may include a first surface 153a in contact with the first portion 114a and a second surface 153b in contact with the second portion 114b. The second surface 153b may correspond to the side surface of the wing portion 153. The second surface 153b of the wing portion 153 may include an inclined surface inclined with respect to the first surface 153a. The second surface 153b of the wing portion 153 may have an incline corresponding to the second portion 114b of the step portion 114. For example, the second surface 153b of the wing portion 153 may include an inclined surface facing the outside of the cell case 110 from the first surface 153a of the wing portion 153 to contact the second portion 114b of the step portion 114.

The cover body 151 may include a wing portion 153 protruding outwardly in the lateral direction further than the convex portion 154 and a concave portion 152 that is formed to be recessed toward the convex portion 154 on the opposite surface of the convex portion 154. The concave portion 152 may be disposed to face the convex portion 154 in the thickness direction (Z) of the cover body 151.

The total thickness (TC) of the injection hole cover 150 may have a value that is the sum of a maximum thickness T3 of the wing portion 153 and a maximum thickness T4 of the convex portion 154. A maximum thickness T2 of the central area 155 of the injection hole cover 150 may have a value that is the same as or similar to the maximum thickness T3 of the wing portion 153. The maximum thickness T2 of the central area 155 of the injection hole cover 150 may be defined as the distance between the protruding surface 154a of the convex portion 154 and the outer side surface of the concave portion 152.

The material of the cap plate 110b may include plated carbon steel (carbon, 0.8% or less) or stainless steel. The material of the injection hole cover 150 may include plated carbon steel (carbon, 0.8% or less) or stainless steel.

The injection hole cover 150 may be manufactured by cutting a long cylinder-shaped raw material to a preset length and then forging the cut coin-shaped material. The injection hole cover 150 may include a convex portion 154, a concave portion 152, and a wing portion 153, and the convex portion 154, the concave portion 152, and the wing portion 153 may be formed by forging. When the concave portion 152 is formed in the injection hole cover 150, the maximum thickness T2 of the central area 155 of the injection hole cover 150 and the maximum thickness T3 of the wing portion 153 may be set to be the same or similar.

The maximum thickness T2 of the central area 155 of the injection hole cover 150 may have a value between 0.8 and 1.2 times the maximum thickness T3 of the wing portion 153. The maximum thickness T2 of the central area 155 of the injection hole cover 150 may have a value of 0.8 to 1.2 times, 0.85 to 1.15 times, 0.9 to 1.1 times, or 0.95 to 1.05 times the maximum thickness T3 of the wing portion 153. The maximum thickness T2 of the central area 155 of the injection hole cover 150 may have a value of 0.8 times or more, 0.85 times or more, 0.9 times or more, or 0.95 times or more the maximum thickness T3 of the wing portion 153. The maximum thickness T2 of the central area 155 of the injection hole cover 150 may have the same value as the maximum thickness T3 of the wing portion 153. The maximum thickness T2 of the central area 155 of the injection hole cover 150 may have a value of 1.2 times or less, 1.15 times or less, 1.1 times or less, or 1.05 times or less the maximum thickness T3 of the wing portion 153.

The depth of the concave portion 152 being sunken may have a value that is the same as or similar to the protrusion height of the convex portion 154. The concave portion 152 and the convex portion 154 may face opposite directions in the central area 155 of the cover body 151.

When the maximum thickness T2 of the central area 155 of the injection hole cover 150 and the maximum thickness T3 of the wing portion 153 have the same or similar values, the injection hole cover 150 may be easily manufactured by forging. For example, if the thickness change is large during forging, it is difficult to process the injection hole cover 150, but in a preferred embodiment, since the maximum thickness T2 of the central area 155 of the injection hole cover 150 and the maximum thickness T3 of the wing portion 153 have the same or similar values, not only is the power consumption applied to the forging reduced, but the defect rate may also be reduced.

The injection hole cover 150 may include a vertical groove 156 recessed in the thickness direction (Z) of the injection hole cover 150 on at least one of the two sides in the thickness direction (Z) of the injection hole cover 150. When the injection hole cover 150 is manufactured by forging, a protrusion corresponding to the vertical groove 156 may be formed in the forging mold. When the vertical groove 156 is formed in the injection hole cover 150, the injection hole cover 150 may be easily manufactured by forging. FIGS. 6 to 8 illustrate a configuration in which a vertical groove 156 is formed on each of the side surfaces of the injection hole cover 150, but the vertical groove 156 may also be formed in only one of the side surfaces of the injection hole cover 150.

The maximum thickness T3 of the wing portion 153 may have a value greater than the maximum thickness T4 of the convex portion 154. In addition, when the maximum thickness T3 of the wing portion 153 has a value greater than the maximum thickness T4 of the convex portion 154, the third height H3, which is the height of the overlapping area where the wing portion 153 and the recessed space 116 overlap, increases, so that the side directional force (side component force) applied to the wing portion 153 due to the pressure inside the cell case 110 may increase. Accordingly, the value of the limit internal pressure that the injection hole cover 150 may withstand against the internal pressure of the battery cell 100 increases, and the injection hole cover 150 may be restricted from being separated from the injection hole 115. In addition, when the maximum thickness T3 of the wing portion 153 increases, the contact surface area between the second surface 153b of the wing portion 153 and the second portion 114b of the step portion 114 increases, and thus the strength of the welding portion (W) may increase.

The thickness T4 of the convex portion 154 may correspond to the depth of the portion where the injection hole cover 150 is inserted into the injection hole 115. The thickness T4 of the convex portion 154 may have a value that is 0.9 times or more the thickness T1 of the cap plate 110b.

For example, the thickness T4 of the convex portion 154 may have a value that is 1 or more times the thickness T1 of the cap plate 110b. Since the convex portion 154 of the injection hole cover 150 is a portion that is inserted into the injection hole 115, if the thickness T4 of the convex portion 154 is 1 or more times the thickness T1 of the cap plate 110b, the convex portion 154 may protrude out of the injection hole 115 and into the inside of the cell case 110. If the thickness T4 of the convex portion 154 is greater than or equal to the thickness T1 of the cap plate 110b, the area at which the side surface 154b of the convex portion 154 and the inner side surface 115a of the injection hole 115 come into contact or may come into contact may increase. Accordingly, when internal pressure is applied toward the injection hole cover 150, the side surface 154b of the convex portion 154 and the inner side surface 115a of the injection hole 115 interfere with each other, thereby preventing detachment of the injection hole cover 150.

The maximum thickness T2 of the central area 155 of the injection hole cover 150 between the outer side surface of the concave portion 152 and the protruding surface 154a of the convex portion 154 may have a value greater than the thickness T1 of the cap plate 110b. The maximum thickness T2 of the central area 155 of the injection hole cover 150 may have a value that is twice or more the thickness T1 of the cap plate 110b. The convex portion 154 of the injection hole cover 150 is inserted into the injection hole 115, and the cover body 151 of the injection hole cover 150 may be disposed on the injection hole 115. In a preferred embodiment, since the injection hole 115 may be covered with an injection hole cover 150 having a large thickness, the injection hole cover 150 may increase the rigidity of the injection hole 115 and the step portion 114 formed in the cap plate 110b. The maximum thickness T2 of the central area 155 of the injection hole cover 150 may have a value of 10 times or less, 7 times or less, 5 times or less, or 3 times or less the thickness T1 of the cap plate 110b. If the maximum thickness T2 of the central area 155 of the injection hole cover 150 is excessively large compared to the thickness T1 of the cap plate 110b, the volume of the space occupied by the injection hole cover 150 increases, which may reduce the energy density of the battery cell 100.

The cap plate 110b may include an outer step portion 117 positioned on the radially outer side of the recessed space 116. The outer step portion 117 of the cap plate 110b may be connected to the third inner surface 116c of the recessed space 116. The outer step portion 117 may be electrically connected to the second electrode tab. The outer step portion 117 may be in direct contact with the second electrode tab or may be electrically connected thereto through a separate current collector. The outer step portion 117 may be provided as an area where the cap plate 110b is welded to the second electrode tab. The plate body 113 may include a plurality of outer step portions 117 spaced apart from each other. When the outer step portion 117 is formed in plurality, since a rough shape is formed on the plate body 113, the rigidity of the cap plate 110b may be improved.

The cap plate 110b may have an outer recessed space 118 formed on the radially outer side of the outer step portion 117. The plurality of outer step portions 117 may be positioned between the recessed space 116 and the outer recessed space 118.

The battery cell 100 may include a venting guide 119 that opens to allow gas inside the cell case 110 to be discharged to the outside when the pressure inside the cell case 110 increases. The venting guide 119 may be formed on the cap plate 110b. The venting guide 119 may have a structure that breaks when the pressure inside the cell case 110 becomes higher than a preset pressure. The venting guide 119 may be configured as a vulnerable part having a thickness thinner than the surroundings so that it is easy to break at the preset pressure. As an example, the venting guide 119 may include a notch or groove formed in the plate body 113.

The venting guide 119 may have a closed curve shape, but is not limited thereto. For example, if at least a portion of the cap plate 110b may be opened, the venting guide may have an open curve shape, and the shape may also be changed in various ways.

Referring to FIG. 8, the welding portion (W) may be formed between the plate body 113 of the cap plate 110b and the cover body 151 of the injection hole cover 150 along the perimeter of the injection hole cover 150. When the perimeter of the injection hole cover 150 has a circular shape, the welding portion (W) may have a circular welding line. The welding portion (W) may be formed in a portion at which the wing portion 153 of the cover body 151 and the step portion 114 come into contact. In a state in which welding is completed, the welding bead of the welding portion (W) may have a height that does not protrude further than the space formed by the step portion 114. For example, as illustrated in FIG. 8, the welding portion (W) may not protrude further outward than the outermost surface of the cap plate 110b.

The contact surface of the convex portion 154 and the injection hole 115 may be disposed closer to the center of the injection hole cover 150 than the welding portion (W) between the injection hole cover 150 and the cap plate 110b. The contact surface of the convex portion 154 and the injection hole 115 may be disposed closer to the center of the injection hole cover 150 than the center portion (WC) of the welding portion (W). Since the contact surface between the convex portion 154 of the cover of the injection hole 115 and the injection hole 115 is located inwardly rather than the center portion (WC) of the welding portion (W), the contact surface between the convex portion 154 and the injection hole 115 may be spaced apart from the center portion (WC) of the welding portion (W). In this case, when the cap plate 110b is deformed by receiving internal pressure, the moment acting on the welding portion (W) may be reduced, and accordingly, the force acting on the welding portion (W) due to the deformation of the cap plate 110b may be reduced, thereby preventing the detachment of the injection hole cover 150.

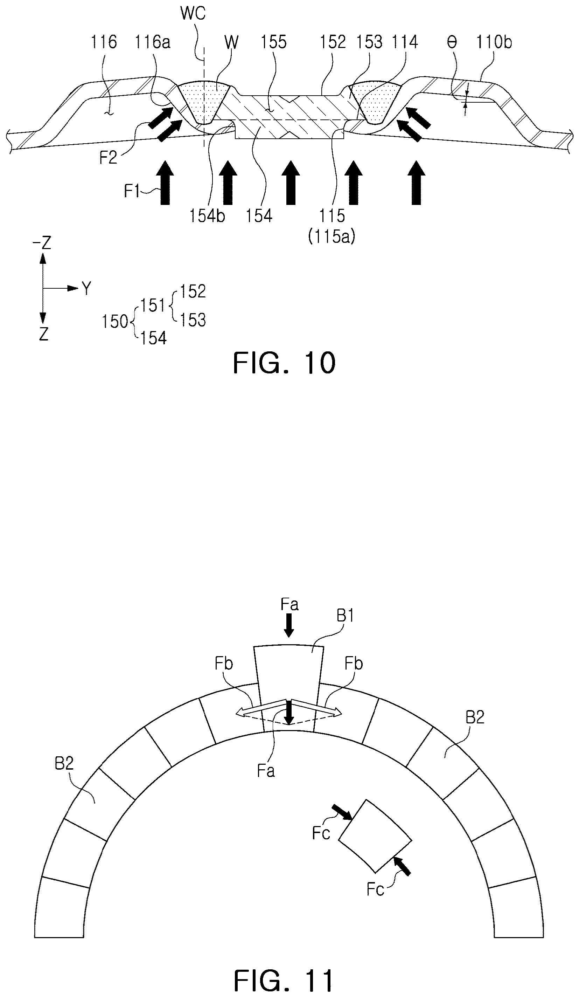

FIGS. 9 and 10 are cross-sectional views illustrating forces acting on a cap plate 110b and an injection hole cover 150. FIG. 9 illustrates a state before the cap plate 110b is deformed, and FIG. 10 illustrates a state after the cap plate 110b is deformed. FIG. 11 is a schematic diagram illustrating forces acting on an arched structure.

Referring to FIGS. 9 and 10, a recessed space 116 may be formed around the injection hole 115 in the cap plate 110b. The recessed space 116 may have a shape overlapping at least a portion of the cover body 151 when the cover body 151 is projected in the lateral direction of the cover body 151. In the case in which the height of the recessed space 116 is set so that the side surface of the cover body 151 and the recessed space 116 overlap, when the internal pressure of the cell case 110 increases, a force F2 including horizontal force (horizontal component force) may be applied to the cover body 151.

Referring to FIG. 11, since the keystone B1 of the arch structure has an inclined surface, a first vertical force (Fa) applied to the keystone B1 may be transmitted to the voussoir B2 adjacent to the keystone. A second force (Fb) applied to the voussoir B2 in contact with the keystone includes horizontal force, and a third force (Fc) applied between the voussoirs B2 may also include horizontal force. In this way, the first vertical force (Fa) acting on the arch structure is converted into a horizontal component force or a horizontal reaction force, so that the arch structure may maintain a stable shape.

Since in the embodiment, a recessed space 116 is formed in the cap plate 110b, a force F2 having a side directional force (side component force) may be applied to the first inner surface 116a of the recessed space 116, similar to a keystone of the arch structure. When comparing the case where the recessed space 116 is formed and the case where the recessed space 116 is not formed under the same internal pressure, the force F1 acting on the cap plate 110b and the injection hole cover 150 in the axis direction of the cell case 110 may be reduced more in the case where the recessed space 116 is formed as in the embodiment than in the case where the recessed space 116 is not formed. For example, based on a preferred embodiment, since a recessed space 116 is formed in the cap plate 110b, and a side force is applied to the cap plate 110b, the force applied in the direction in which the injection hole cover 150 is detached may be reduced. Therefore, based on a preferred embodiment, the value of the limit internal pressure that the injection hole cover 150 may withstand against the internal pressure of the battery cell 100 may be increased. In this case, the limit internal pressure may be defined as the pressure (force) that the injection hole cover 150 may withstand without being detached from the injection hole 115.

Referring to FIG. 10, the central portion of the cap plate 110b may be convexly deformed by the internal pressure of the cell case 110, and an inclination of a predetermined angle (θ) may be formed on the outer side surface of the cap plate 110b. When the cap plate 110b is deformed, the side surface 154b of the convex portion 154 and the inner side surface 115a of the injection hole 115 interfere with each other, so that the deformation of the cap plate 110b may be limited. Accordingly, the detachment of the injection hole cover 150 may be prevented.

In addition, based on a preferred embodiment, the contact surface of the convex portion 154 and the injection hole 115 is disposed closer to the center of the injection hole cover 150 than the center (WC) of the welding portion (W) between the injection hole cover 150 and the cap plate 110b, so that the moment acting on the welding portion (W) may be reduced. Accordingly, the force acting on the welding portion (W) is reduced due to the deformation of the cap plate 110b, so that the detachment of the injection hole cover 150 may be prevented.

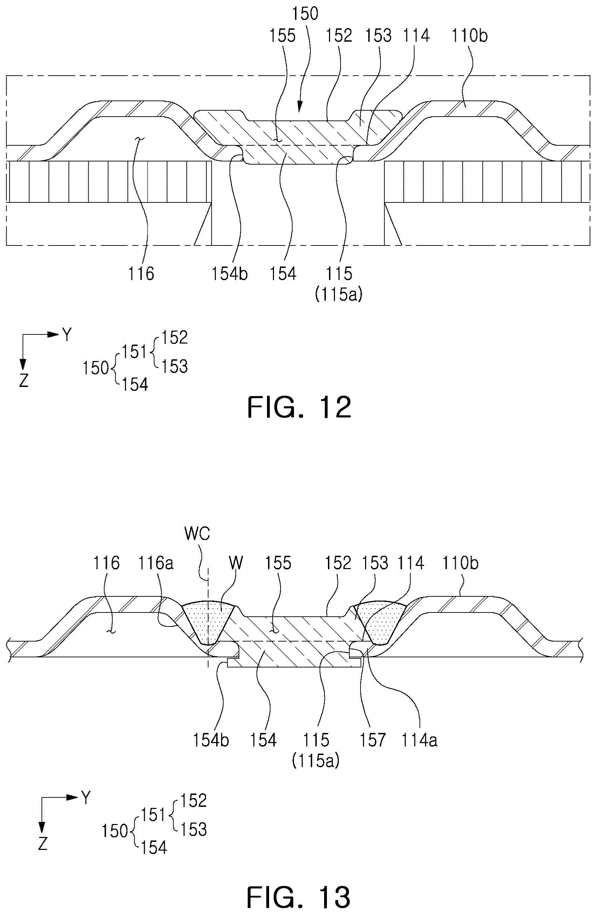

FIG. 12 is a cross-sectional view illustrating another embodiment of the configuration illustrated in FIG. 8.

In the embodiment of FIG. 8, the injection hole cover 150 may include a vertical groove 156 recessed in the thickness direction (Z) of the injection hole cover 150 at least on one of the two sides in the thickness direction. In contrast, in the embodiment illustrated in FIG. 12, the injection hole cover 150 may not include the vertical groove 156. In the disclosed technology, the injection hole cover 150 may have a flat shape on both sides in the thickness direction. For example, the outer side surface of the concave portion 152 and the protruding surface 154a of the convex portion 154 may have a flat shape.

The remaining contents of the description of the embodiments of FIGS. 4 to 8, except for the vertical groove 156, may also be applied to another embodiment of the configuration illustrated in FIG. 12.

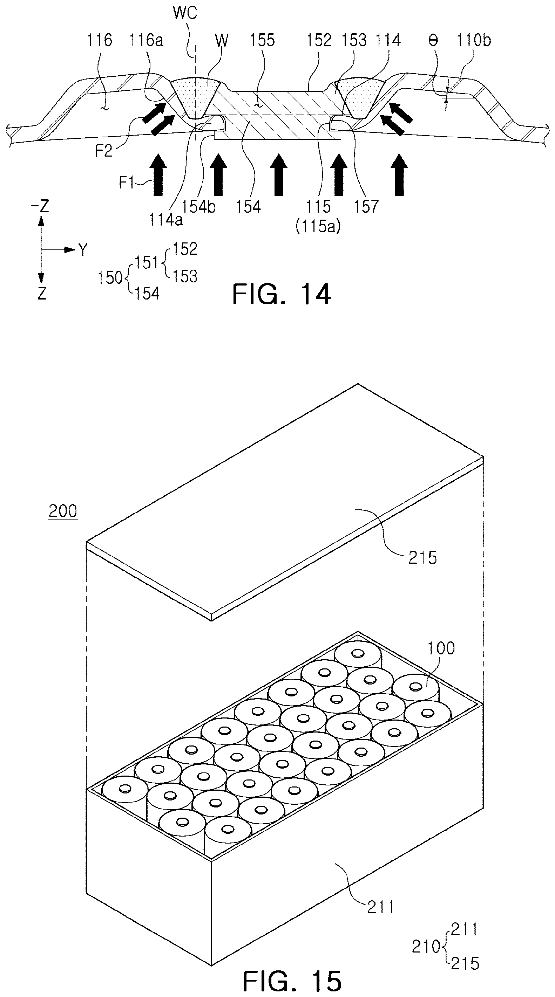

FIG. 13 is a cross-sectional view illustrating another embodiment of the configuration illustrated in FIG. 8. FIG. 14 is a cross-sectional view illustrating a deformed state of the cap plate 110b in FIG. 13.

Compared to the embodiment illustrated in FIG. 8, the embodiments illustrated in FIGS. 13 and 14 differ in that an insertion groove 157 is formed in the injection hole cover 150. The contents of the descriptions of the embodiments of FIGS. 4 to 8, excluding the differences, may also be applied to the embodiments of FIGS. 13 and 14.

The convex portion 154 of the injection hole cover 150 includes an insertion groove 157 that is formed to be recessed in a lateral direction of the injection hole cover 150, around the side surface 154b of the convex portion 154, and the inner side surface 115a of the injection hole 115 may be inserted into the insertion groove 157. The insertion groove 157 may be formed on at least a portion of the perimeter of the convex portion 154. The insertion groove 157 may restrict the injection hole cover 150 from being separated from the injection hole 115. For example, as illustrated in FIG. 14, the cap plate 110b may be maintained in a state of being coupled to the injection hole cover 150 even when the cap plate 110b is deformed.

FIG. 15 is a perspective view of a battery module based on a preferred embodiment.

Referring to FIG. 15, a battery module 200 based on a preferred embodiment may include a plurality of battery cells 100 and a module housing 210 that accommodates the plurality of battery cells 100.

At least one of the plurality of battery cells 100 provided in the battery module 200 may be applied with at least one of the battery cells 100 described with reference to FIGS. 1 to 14.

The detailed type of the battery module 200 of the disclosed technology is not limited as long as it includes a plurality of battery cells 100. For example, the battery module 200 of the disclosed technology is defined as including all of a battery pack, an energy storage device or the like.

The module housing 210 may provide a space that accommodates a plurality of battery cells 100. The module housing 210 may include a housing body 211 that forms a space for accommodating a plurality of battery cells 100, and a housing cover 215 covering the upper side of the plurality of battery cells 100.

The contents described above are merely examples of applying the principles of the disclosed technology, and other configurations may be further included without departing from the scope of the disclosed technology. In addition, some components of the above-described embodiments may be deleted and implemented, and respective embodiments may be implemented in combination with each other.

As set forth above, in a preferred embodiment, the limit internal pressure of an injection hole cover may be improved.

In a preferred embodiment, the rupture of an injection hole cover may be prevented and the stability of a battery cell may be improved.

(Aspect 1) A battery cell A battery cell comprising: a cell case having an accommodating space therein and including a case body and a cap plate covering an open end of the case body; an electrode assembly disposed in the accommodating space of the cell case; an electrode terminal disposed on the case body and electrically connected to the electrode assembly; and an injection hole cover covering an injection hole formed in the cap plate, wherein the cap plate includes a step portion recessed toward an inside of the cell case from an outer side surface of the cap plate, and a recessed space formed on at least a portion of a periphery of the step portion and recessed toward an outside of the cell case from an inner side surface of the cap plate, the injection hole cover includes a cover body installed on the step portion and covering the injection hole, and a convex portion extending from the cover body to be inserted into the injection hole, and the recessed space has a shape overlapping at least a portion of the cover body when the cover body is projected in a lateral direction of the cover body.

(Aspect 2) The battery cell of aspect 1, wherein the cover body includes a wing portion protruding outwardly in the lateral direction rather than the convex portion, and the recessed space overlaps at least a portion of the wing portion in the lateral direction of the cover body.

(Aspect 3) The battery cell of aspect 2, wherein the step portion includes a first portion in which the injection hole is formed and a second portion disposed on an outer side of the first portion, the second portion includes an inclined surface facing an outer side of the cell case from the first portion, and the recessed space has a shape that widens toward the inside of the cell case at a portion opposite to the second portion.

(Aspect 4) The battery cell of aspect 3, wherein the wing portion includes a first surface contacting the first portion and a second surface contacting the second portion, and wherein the second surface includes an inclined surface, inclined with respect to the first surface.

(Aspect 5) The battery cell of any one of aspects 1 to 4, wherein a side surface of the convex portion and an inner side surface of the injection hole are disposed to contact each other or are disposed to be contactable each other when the cap plate is deformed.

(Aspect 6) The battery cell of aspect 5, wherein a contact surface of the convex portion and the injection hole is disposed closer to a center of the injection hole cover than a welding portion between the injection hole cover and the cap plate.

(Aspect 7) The battery cell of any one of aspects 1 to 6, wherein the cover body includes a wing portion protruding outwardly in the lateral direction rather than the convex portion and a concave portion recessed toward the convex portion on an opposite side of the convex portion.

(Aspect 8) The battery cell of aspect 7, having one or more of the following characteristics (i) to (ii), respectively alone or in combination: (i) a maximum thickness of a central area of the injection hole cover has a value between 0.8 and 1.2 times a maximum thickness of the wing portion, and/or (ii) a maximum thickness of the wing portion has a value greater than a maximum thickness of the convex portion.

(Aspect 9) The battery cell of any one of aspects 1 to 8, having one or more of the following characteristics (i) to (iii), respectively alone or in combination: (i) the injection hole cover includes a vertical groove recessed in a thickness direction of the injection hole cover on at least one of two sides in the thickness direction of the injection hole cover, (ii) a maximum thickness of a central area of the injection hole cover has a value twice or more a thickness of the cap plate, and/or (iii) a thickness of the convex portion has a value equal to one or more times a thickness of the cap plate.

(Aspect 10) The battery cell of any one of aspects 1 to 9, wherein the convex portion of the injection hole cover includes an insertion groove recessed in a lateral direction of the injection hole cover around a side surface of the convex portion, and an inner side surface of the injection hole is inserted into the insertion groove.

(Aspect 11) The battery cell of any one of aspects 1 to 10, wherein the case body includes a side wall and an end plate, wherein the side wall and the end plate are formed integrally, and the electrode terminal is riveted to the end plate.

(Aspect 12) An injection hole cover covering an injection hole formed in a cap plate of a battery cell, the injection hole cover comprising: a cover body installed in a step portion recessed in the cap plate and covering the injection hole, and a convex portion extending from the cover body to be inserted into the injection hole, wherein the cover body includes a wing portion protruding outwardly in a lateral direction rather than the convex portion, and a concave portion recessed toward the convex portion on an opposite surface of the convex portion.

(Aspect 12) The injection hole cover of aspect 12, having one or more of the following characteristics (i) to (iii), respectively alone or in combination: (i) a maximum thickness of a central area of the injection hole cover has a value between 0.8 and 1.2 times a maximum thickness of the wing portion, (ii) a maximum thickness of the wing portion has a value greater than a maximum thickness of the convex portion, and/or (iii) the injection hole cover includes a vertical groove recessed in a thickness direction of the injection hole cover on at least one of two sides in the thickness direction of the injection hole cover.

(Aspect 13) The injection hole cover of aspect 12 or 13, wherein the wing portion includes a first surface having a step with respect to the convex portion, and a second surface extending from the first surface in a thickness direction of the cover body, wherein the second surface includes an inclined surface, inclined with respect to the first surface.

(Aspect 14) A battery module comprising: a plurality of battery cells; and a module housing accommodating the plurality of battery cells, wherein at least one of the plurality of battery cells includes, a cell case having an accommodating space therein and including a case body and a cap plate covering an open end of the case body; an electrode assembly disposed in the accommodating space of the cell case; an electrode terminal disposed on the case body and electrically connected to the electrode assembly; and an injection hole cover covering an injection hole formed in the cap plate, wherein the cap plate includes a step portion recessed toward an inside of the cell case from an outer side surface of the cap plate, and a recessed space formed on at least a portion of a periphery of the step portion and recessed toward an outside of the cell case from an inner side surface of the cap plate, the injection hole cover includes a cover body installed on the step portion and covering the injection hole, and a convex portion extending from the cover body to be inserted into the injection hole, and the recessed space has a shape overlapping at least a portion of the cover body when the cover body is projected in a lateral direction of the cover body.

## Claims

1. A battery cell comprising:
a cell case having an accommodating space therein and including a case body and a cap plate covering an open end of the case body;
an electrode assembly disposed in the accommodating space of the cell case;
an electrode terminal disposed on the case body and electrically connected to the electrode assembly; and
an injection hole cover covering an injection hole formed in the cap plate,
wherein the cap plate includes a step portion recessed toward an inside of the cell case from an outer side surface of the cap plate, and a recessed space formed on at least a portion of a periphery of the step portion and recessed toward an outside of the cell case from an inner side surface of the cap plate,
the injection hole cover includes a cover body installed on the step portion and covering the injection hole, and a convex portion extending from the cover body to be inserted into the injection hole, and
the recessed space has a shape overlapping at least a portion of the cover body when the cover body is projected in a lateral direction of the cover body.

2. The battery cell of claim 1, wherein the cover body includes a wing portion protruding outwardly in the lateral direction rather than the convex portion, and
the recessed space overlaps at least a portion of the wing portion in the lateral direction of the cover body.

3. The battery cell of claim 2, wherein the step portion includes a first portion in which the injection hole is formed and a second portion disposed on an outer side of the first portion,
the second portion includes an inclined surface facing an outer side of the cell case from the first portion, and
the recessed space has a shape that widens toward the inside of the cell case at a portion opposite to the second portion.

4. The battery cell of claim 3, wherein the wing portion includes a first surface contacting the first portion and a second surface contacting the second portion, and
wherein the second surface includes an inclined surface, inclined with respect to the first surface.

5. The battery cell of any one of claims 1 to 4, wherein a side surface of the convex portion and an inner side surface of the injection hole are disposed to contact each other or are disposed to be contactable each other when the cap plate is deformed.

6. The battery cell of claim 5, wherein a contact surface of the convex portion and the injection hole is disposed closer to a center of the injection hole cover than a welding portion between the injection hole cover and the cap plate.

7. The battery cell of any one of claims 1 to 6, wherein the cover body includes a wing portion protruding outwardly in the lateral direction rather than the convex portion and a concave portion recessed toward the convex portion on an opposite side of the convex portion.

8. The battery cell of claim 7, having one or more of the following characteristics (i) to (ii), respectively alone or in combination:
(i) a maximum thickness of a central area of the injection hole cover has a value between 0.8 and 1.2 times a maximum thickness of the wing portion, and/or
(ii) a maximum thickness of the wing portion has a value greater than a maximum thickness of the convex portion.

9. The battery cell of any one of claims 1 to 8, having one or more of the following characteristics (i) to (iii), respectively alone or in combination:
(i) the injection hole cover includes a vertical groove recessed in a thickness direction of the injection hole cover on at least one of two sides in the thickness direction of the injection hole cover,
(ii) a maximum thickness of a central area of the injection hole cover has a value twice or more a thickness of the cap plate, and/or
(iii) a thickness of the convex portion has a value equal to one or more times a thickness of the cap plate.

10. The battery cell of any one of claims 1 to 9, wherein the convex portion of the injection hole cover includes an insertion groove recessed in a lateral direction of the injection hole cover around a side surface of the convex portion, and
an inner side surface of the injection hole is inserted into the insertion groove.

11. The battery cell of any one of claims 1 to 10, wherein the case body includes a side wall and an end plate,
wherein the side wall and the end plate are formed integrally, and
the electrode terminal is riveted to the end plate.

12. An injection hole cover covering an injection hole formed in a cap plate of a battery cell, the injection hole cover comprising:
a cover body installed in a step portion recessed in the cap plate and covering the injection hole, and a convex portion extending from the cover body to be inserted into the injection hole,
wherein the cover body includes a wing portion protruding outwardly in a lateral direction rather than the convex portion, and a concave portion recessed toward the convex portion on an opposite surface of the convex portion.

13. The injection hole cover of claim 12, having one or more of the following characteristics (i) to (iii), respectively alone or in combination:
(i) a maximum thickness of a central area of the injection hole cover has a value between 0.8 and 1.2 times a maximum thickness of the wing portion,
(ii) a maximum thickness of the wing portion has a value greater than a maximum thickness of the convex portion, and/or
(iii) the injection hole cover includes a vertical groove recessed in a thickness direction of the injection hole cover on at least one of two sides in the thickness direction of the injection hole cover.

14. The injection hole cover of claim 12 or 13, wherein the wing portion includes a first surface having a step with respect to the convex portion, and a second surface extending from the first surface in a thickness direction of the cover body,
wherein the second surface includes an inclined surface, inclined with respect to the first surface.

15. A battery module comprising:
a plurality of battery cells; and
a module housing accommodating the plurality of battery cells,
wherein at least one of the plurality of battery cells includes,
a cell case having an accommodating space therein and including a case body and a cap plate covering an open end of the case body;
an electrode assembly disposed in the accommodating space of the cell case;
an electrode terminal disposed on the case body and electrically connected to the electrode assembly; and
an injection hole cover covering an injection hole formed in the cap plate,
wherein the cap plate includes a step portion recessed toward an inside of the cell case from an outer side surface of the cap plate, and a recessed space formed on at least a portion of a periphery of the step portion and recessed toward an outside of the cell case from an inner side surface of the cap plate,
the injection hole cover includes a cover body installed on the step portion and covering the injection hole, and a convex portion extending from the cover body to be inserted into the injection hole, and
the recessed space has a shape overlapping at least a portion of the cover body when the cover body is projected in a lateral direction of the cover body.
